# EUROPEAN PATENT APPLICATION

(11) **EP 2 578 809 A2**
(43) Date of publication of application: **10.04.2013**
(21) Application number: 12186208.0
(22) Date of filing: 27.09.2012
(51) Int. Cl.: F01D 9/04

(54) **Turbomachine having a gas flow aeromechanic system and method**

(30) Priority: 03.10.2011 US 201113251550
(71) Applicant: General Electric Company, Schenectady, NY 12345 (US)
(72) Inventor: Stein, Alexander, Greenville, SC South Carolina 29615 (US)
(74) Representative: Cleary, Fidelma

(57) **Abstract**

A turbomachine including an improved backflow margin includes a combustor portion fluidly connected to a turbine portion. The turbine portion (6) includes a gas path, a first stage having a first plurality of airfoil members (30,32) arranged along the gas path, and a second stage having a second plurality of airfoil members (40,42), arranged along the gas path (15) downstream from the first stage. The first plurality of airfoil members (30,32) are configured to intercept combustion gases (50) from the combustor portion at a first momentum and create a wake zone (60) having a second momentum that is lower than the first momentum. The turbomachine includes a gas flow aeromechanics system (80) configured and disposed to improve gas flow aeromechanics along the gas path by circumferentially clocking the second plurality of airfoil members (40,42) relative to the first plurality of airfoil members (30,32) to intercept the wake zone (60) at the second momentum.

## Description

### BACKGROUND OF THE INVENTION

The subject matter disclosed herein relates to the art of turbomachines and, more particularly, to gas flow aeromechanic system for a turbomachine.

Generally, turbomachines combust fuel to drive a turbine which powers, for example, generators, pumps and the like. Fuel, such as natural gas, refined oil, syngas and the like are passed to a combustor and mixed with air and/or other diluents to form a combustible mixture. The mixture is combusted to form hot gases that are passed to a turbine portion. In the turbine portion, the hot gases are expanded through a series of stators and rotors. The rotors convert thermal energy from the hot gases to mechanical, rotational energy.

In operation, a portion of the hot gases flows freely along a gas path that extends through the turbomachine. Another portion of the hot gases impinge upon airfoils positioned along the gas path. The portion of gases impinging upon the airfoils slows and thus has lower momentum relative to gasses that pass freely along the gas path. More specifically, the portion of gases flowing freely along the gas path has a momentum that is higher than the portion of gases that impinge upon airfoil surfaces. The portion of gases having the higher momentum also impinges upon subsequent airfoils. When gasses having the higher momentum impinge upon the airfoil surfaces, a bow wave is produced at a leading edge of the airfoil. The bow wave interacts with the gases (both at a low momentum and at a high momentum) flowing along the gas path creating pressure variations that reduce a back flow margin in the turbomachine. Back flow margin is defined as a pressure difference between cooling air pressure outside the gas path and pressure of the hot gases flowing along the gas path. A positive back flow margin limits leakage of hot gases from the gas path. Loss of gases flowing along the gas path leads to a reduction in output from the turbomachine and may cause damage to secondary flow/cooling components resulting from hot gas ingestion.

### BRIEF DESCRIPTION OF THE INVENTION

According to one aspect of the invention, a turbomachine includes an aeromechanics system having a compressor portion, and a combustor portion fluidly connected to the compressor portion. A turbine portion is fluidly connected to the combustor portion and mechanically coupled to the compressor portion. The turbine portion includes a gas path, a first stage having a first plurality of airfoil members arranged along the gas path, and a second stage having a second plurality of airfoil members arranged along the gas path downstream from the first stage. The first plurality of airfoil members are configured to intercept combustion gases from the combustor portion at a first momentum and create a wake zone having a second momentum that is lower than the first momentum. The turbomachine includes a gas flow aeromechanics system configured and disposed to improve gas flow aeromechanics along the gas path by circumferentially clocking the second plurality of airfoil members relative to the first plurality of airfoil members to intercept the wake zone at the second momentum.

According to another aspect of the invention, a method for improving aeromechanics in a turbomachine includes guiding combustion gases having a first momentum toward a first plurality of airfoil members arranged along a gas path of a turbine, passing the combustion gases at the first momentum over the first plurality of airfoil members, forming a wake zone downstream from the first plurality of airfoil members with the wake zone having a second momentum that is lower than the first momentum. A leading edge of a second plurality of airfoil members is positioned downstream from the first plurality of airfoil members so as to intercept the wake zone, and reduce aeromechanic forces between the first plurality of airfoil members and second plurality of airfoil members to improve aeromechanics along the gas path.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is a schematic view of a gas turbomachine including a backflow margin improvement system in accordance with an exemplary embodiment; and
FIG. 2 is a schematic view of the back flow margin improvement system in accordance with the exemplary embodiment.

The detailed description explains embodiments of the invention, together with advantages and features, by way of example with reference to the drawings.

### DETAILED DESCRIPTION OF THE INVENTION

In general, turbomachines require significant purge flows to maintain wheelspace temperatures. Gases flowing along a hot gas path within the turbine impinge upon stationary and rotating surfaces creating various disturbances such as bow waves. The various disturbances have a negative impact on backflow margin, or a pressure differential between the hot gas path and wheel space areas in the turbine. The bow wave also leads to aeromechanic forcing or pressure on upstream components that negatively impact gas path aeromechanics. It is desirable to maintain a positive back flow margin in order to inhibit hot gases from exiting the hot gas path into wheelspace areas. Accordingly, as will be discussed more fully below, exemplary embodiments provide a system for improving backflow margin in a turbomachine.

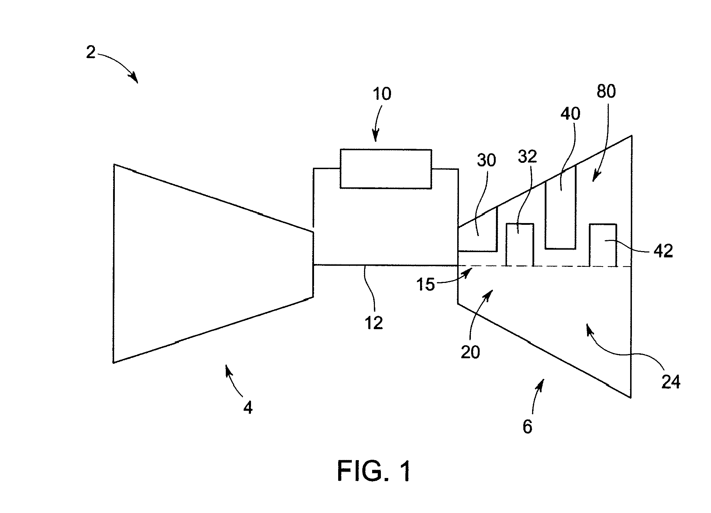

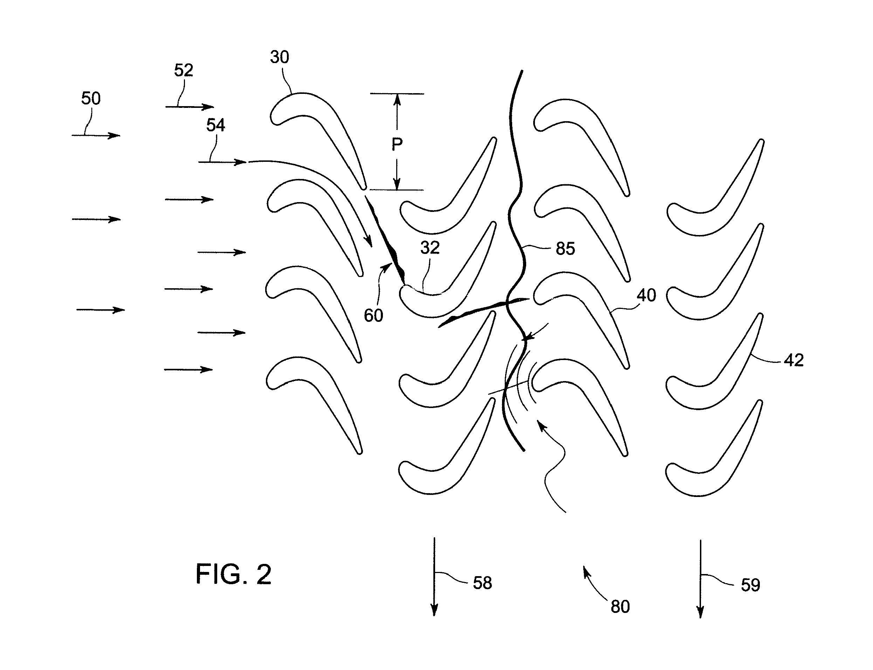

With reference to FIGs. 1 and 2, a turbomachine, constructed in accordance with an exemplary embodiment, is indicated generally at 2. Turbomachine 2 includes a compressor portion 4 operatively connected to a turbine portion 6 through a combustor portion 10. Compressor portion 4 is also operatively connected with turbine portion 6 via a common compressor turbine shaft 12. Turbine portion 6 includes a gas path 15 along which are arranged a first stage 20 and a second stage 24. As shown, second stage 24 is positioned downstream from first stage 20. At this point it should be appreciated that the number of stages in turbine portion 6 can vary. First stage 20 includes a plurality of first stage stator airfoil members, one of which is indicated at 30, and a plurality of first stage rotor airfoil members, one of which is indicated at 32. First stage rotor airfoil members 32 are positioned downstream from first stage stator airfoil members 30. Similarly, second stage 24 includes a plurality of second stage stator airfoil members, one of which is indicated at 40, and a plurality of second stage rotor airfoil members one of which is indicated at 42. Second stage rotor airfoil members 42 are positioned downstream from second stage stator airfoil members 40.

With this arrangement, hot gases 50 having a first momentum pass from combustor portion 10 into gas path 15 of turbine portion 6 toward first stage 20. A first portion 52 of hot gases 50 impinges upon and flows over the plurality of first stage stator airfoil members 30 toward the plurality of first stage rotor airfoil members 32. A second portion 54 of hot gases 50 flows relatively unobstructed between first stage stator airfoil members 30 toward first stage rotor airfoil members 32. The plurality of first stage stator airfoil members 30 conditions first portion 52 of hot gases 50 to flow along a desired flow path so as to impact the plurality of first stage rotor airfoil members 32 at a desired trajectory. In response to the flow of hot gases 50, the plurality of first stage rotor airfoil members 32 begin to rotate in a direction such as indicated by arrow 58. The flow continues along the gas path causing subsequent rotor airfoil members to rotate, in a direction such as indicated by arrow 59, such that turbine 6 operates at a desired output.

After flowing over first stage stator airfoil members 30, a wake zone 60 is formed in first portion 52 of hot gases 50. Wake zone 60 develops downstream of first stage airfoil member 30, flows across first stage rotor airfoil members 32 and flows toward second stage stator airfoil members 40. After impinging upon airfoil surfaces, wake zone 60 slows to a second momentum that is less than the first momentum. At the same time, second portion 54 of hot gases 50 remains substantially at the first momentum. In order to limit interaction between second stage stator airfoil members 40 and the second portion 54 of hot gases 50, turbine portion 6 is provided with a gas flow improvement system 80 that establishes a particular orientation of second stage stator airfoil members 40 relative to first stage stator airfoil members 30.

In accordance with one aspect of the exemplary embodiment, gas flow improvement system 80 establishes an improved back flow margin and reduced bow wave within turbine portion 6. Gas flow improvement system circumferentially offsets or clocks second plurality of stator airfoil members 40 relative to first plurality of stator airfoil members 30. More specifically, gas flow improvement system 80 circumferentially positions second stage stator airfoil members 40 to intercept wake zone 60 flowing from first stage stator airfoil members 30. Intercepting wake zone 60 ensures that a lower momentum fluid flow impacts at or near leading edge regions of second stage stator airfoil members 40 in such a manner so as to increase back flow margin. The lower momentum flow reduces formation of a bow wave 85 upstream of second stage stator airfoil members 40, which, in turn, leads to an improvement in backflow margin. That is, by avoiding or reducing contact between second stage stator airfoil members 40 and second portion 54 of hot gases 50, back flow margin improvement system enhances back flow margin upstream so as to reduce ingestion of hot gases from the hot gas path into the wheelspace. The reduction in the bow wave also leads to reduced aeromechanic forcing or reduced circumferential static pressure variation that improves gas flow aeromechanics along gas path 15. Thus, improving aeromechanics along gas path 15 should be understood to include decreasing aeromechanic forcing on upstream airfoil members.

At this point it should be understood that the particular degree or percentage of clocking is machine and operating condition specific. For example, each first stage stator airfoil member includes a particular pitch or bucket width angle "p" relative to hot gases 50. In accordance with the exemplary embodiment shown, second stage stator airfoil members 40 are circumferentially clocked less than one pitch 90 relative to first stage stator airfoil members 30. Of course, it should be understood that second stage stator airfoil member 40 could also be circumferentially clocked more than pitch "p". It should also be understood that while described in terms of two stages, the gas flow aeromechanics system can be applied to any number of stages in a turbine. Moreover, the degree of clocking between adjacent stages can vary and be more or less than pitch "p" depending upon machine and operational characteristics. Also, while described in terms of stator airfoil members, the gas flow aeromechanic system could also be applied to rotor airfoil members. It should be further understood that the particular positioning of the airfoil members could lead to a reduction in bow wave strength, an improvement in aeromechanics or a reduction in bow wave strength and an improvement in aeromechanics margin.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A turbomachine (2) including a gas flow aeromechanics system comprising:
a compressor portion (4);
a combustor portion (10) fluidly connected to the compressor portion (4);
a turbine portion (6) fluidly connected to the combustor portion (10) and mechanically coupled to the compressor portion (4), the turbine portion (6) including a gas path (15), a first stage (20) having a first plurality of airfoil members (30,32) arranged along the gas path (15), and a second stage (24) having a second plurality of airfoil members (40,42) arranged along the gas path (15) downstream from the first stage (20), the first plurality of airfoil members being configured to intercept combustion gases (50) from the combustor portion (10) at a first momentum and create a wake zone (60) having a second momentum that is lower than the first momentum; and
a gas flow aeromechanics system (80) configured and disposed to improve gas flow aeromechanics along the gas path (15) by circumferentially clocking the second plurality of airfoil members (40,42) relative to the first plurality of airfoil members (30,32) to intercept the wake zone (60) at the second momentum.

2. The turbomachine according to claim 1, wherein the first plurality of airfoil members (30,32) constitute a first plurality of stationary airfoil members and the second plurality of airfoil members (40,42) constitute a second plurality of stationary airfoil members.

3. The turbomachine according to claim 1 or 2, wherein the first plurality of airfoil members (30,32) include a first pitch (90), the second plurality of airfoil members (40,42) being clocked relative to the first plurality of airfoil members (30,32) less than the first pitch (90).

4. The turbomachine according to any of claims 1 to 3, wherein the gas flow aeromechanics system (80) is configured and disposed to guide the wake zone (60) at the second momentum to intercept a leading edge of each of the second plurality of airfoil members (40,42) so as to reduce a bow wave (85) between the first plurality of airfoil members (30,32) and the second plurality of airfoil members (40,42).

5. The turbomachine according to any of claims 1 to 4, wherein the gas flow aeromechanics system (80) is configured and disposed to guide the wake zone (60) at the second momentum to intercept a leading edge of each of the second plurality of airfoil members (40,42) so as to improve a backflow margin upstream of the second plurality of airfoil members (40,42).

6. A method for improving gas flow aeromechanics in a turbomachine, the method comprising:
guiding combustion gases (50) having a first momentum toward a first plurality of airfoil members (30,32) arranged along a gas path (15) of a turbine (6);
passing the combustion gases (50) at the first momentum over the first plurality of airfoil members (30,32);
forming a wake zone (60) downstream from the first plurality of airfoil members (30,32), the wake zone (60) having a second momentum that is lower than the first momentum;
positioning a leading edge of a second plurality of airfoil members (40,42) downstream from the first plurality of airfoil members (30,32) so as to intercept the wake zone (60); and
reducing aeromechanic forces between the first plurality of airfoil members (30,32) and the second plurality of airfoil members (40,42) to improve aeromechanics along the gas path (15).

7. The method according to claim 6, wherein guiding the combustion gases (50) toward the first plurality of airfoil members (30,32) includes guiding the combustion gases (50) toward a plurality of stationary airfoil members.

8. The method according to claim 6 or 7, wherein positioning the leading edge of the second plurality of airfoil members (40,42) includes positioning the leading edge of a plurality of stationary airfoil members to intercept the wake zone (60).

9. The method according to any of claims 6 to 8, wherein positioning the leading edge of the second plurality of airfoil members (40,42) to intercept the wake zone (60) includes clocking the second plurality of airfoil members (40,42) relative to the first plurality of airfoil members (30,32).

10. The method of any of claims 6 to 9, wherein improving gas flow aeromechanics within the gas path (15) includes improving aeromechanics on a third plurality of airfoil members arranged between the first plurality of airfoil members (30,32) and the second plurality of airfoil members (40,42).

11. The method of any of claims 6 to 10, wherein improving gas flow aeromechanics within the gas path (15) includes reducing a bow wave (85) upstream of the second plurality of airfoil members (40,42).

12. The method of any of claims 6 to 11, wherein improving gas flow aeromechanics within the gas path (15) includes improving gas flow margin between the first plurality of airfoil members (30,32) and the second plurality of airfoil members (40,42) and reducing a bow wave (85) upstream of the second plurality of airfoil members (40,42).
